# EUROPEAN PATENT SPECIFICATION

(11) **EP 4 164 272 B1**
(45) Date of publication and mention of the grant of the patent: **18.09.2024**
(21) Application number: 21821052.4
(22) Date of filing: 28.05.2021
(51) Int. Cl.: H04W 12/08, H04W 60/00

(54) **INFORMATION PROCESSING METHOD, AND NETWORK ELEMENT AND COMPUTER-READABLE STORAGE MEDIUM**
INFORMATIONSVERARBEITUNGSVERFAHREN UND NETZWERKELEMENT UND COMPUTERLESBARES SPEICHERMEDIUM
PROCÉDÉ DE TRAITEMENT D'INFORMATIONS, ÉLÉMENT DE RÉSEAU ET SUPPORT DE STOCKAGE LISIBLE PAR ORDINATEUR

(30) Priority: 08.06.2020 CN 202010513723
(43) Date of publication of application: 12.04.2023
(73) Proprietor: ZTE Corporation, Shenzhen, Guangdong 518057 (CN)
(72) Inventor: SONG, Dameng, Shenzhen, Guangdong 518057 (CN); FENG, Shijin, Shenzhen, Guangdong 518057 (CN)
(74) Representative: Zoli, Filippo
(86) International application number: PCT/CN2021/096870
(87) International publication number: WO 2021/249213

(56) References cited:
- WO-A1-2020/020295
- CN-A- 105 050 072
- CN-A- 106 712 973
- CN-A- 110 035 040
- CN-A- 110 048 951
- CN-A- 110 365 630
- CN-A- 110 972 090
- CN-A- 110 972 090
- CHINA MOBILE: "Clarification on AF using legacy Rx binding with relevant PCF", 3GPP DRAFT; S2-182212 CR 23.503 CLARIFICATION ON RX INTREFACE MESSAGE ROUTING, vol. SA WG2, 20 February 2018 (2018-02-20), Montreal, Canada, pages 1 - 2, XP051408738

## Description

### TECHNICAL FIELD

The embodiments of this application relate to, but are not limited to, the field of communication technologies, and more particularly to an information processing method, a network element, and a computer-readable storage medium.

### BACKGROUND

For a 4G network, its policy and charging control (PCC) function requires that a Gx interface session and an Rx interface session of the same user are bound on the same policy and charging rules function (PCRF) network element; and when a plurality of PCRF network elements is deployed, it is necessary to use a diameter routing agent (DRA) network element to implement session binding, thereby storing a binding relationship of user code numbers, an Internet protocol (IP) address and a PCRF address, i.e., storing related session binding information. Similarly, in a 5G network, N7 interface signaling, N5 interface signaling, and Rx interface signaling which are related to a packet data network (PDN) session of the same user also need to be addressed to the same policy control function (PCF) network element; and when a plurality of PCF network elements is deployed, it is also necessary to use the DRA network element to implement session binding.

However, in the architecture of multi-network convergence, an IP multimedia subsystem (IMS) network is not specifically attributable to the 4G network or the 5G network, so whether the user is a 5G network user or a 4G network user cannot be determined when the IMS network provides services for both 4G network users and 5G network users, and thus it is impossible to know the ownership of user's session binding information, so that the corresponding policy control authorization cannot be accurately obtained. In order to solve the above problems, by newly adding a service interface to the DRA network element in some cases in this art, the DRA network element can query a binding support function (BSF) network element for the corresponding session binding information through the service interface, such that a call service initiated by the user can be addressed to a corresponding target policy control server.

However, it is necessary in some cases in this art to upgrade and transform a large number of currently deployed DRA network elements, for example, to upgrade and extend the service interface, which will result in a large amount of maintenance costs for upgrade and transformation.

CN110972090A discloses a method for selecting a PCRF and a PCF.

### SUMMARY

The invention is defined by claims 1, 5, 9 and 10.

The following is an overview of the topics detailed in the present description. This summary is not intended to limit the protection scope of the claims.

Embodiments of this application provide an information processing method, a network element and a computer-readable storage medium.

In a first aspect, an embodiment of this application provides an information processing method applied to a BSF network element. The information processing method includes: receiving 5G session binding information sent by a PCF network element; mapping the 5G session binding information to generate 4G session binding information; generating synchronization information that describes a mapping relationship between the 5G session binding information and the 4G session binding information; sending the synchronization information to a DRA network element by means of a synchronization interface, such that the DRA network element, in the case of receiving an access authorization request message belonging to a 5G network, forwards the access authorization request message belonging to the 5G network to the PCF network element according to the mapping relationship in the synchronization information.

In a second aspect, an embodiment of this application further provides an information processing method applied to a DRA network element. The information processing method includes: receiving synchronization information sent by a BSF network element through a synchronization interface, wherein the synchronization information describes a mapping relationship of 5G session binding information and 4G session binding information, the 5G session binding information is derived from a PCF network element, and the 4G session binding information is generated from the 5G session binding information by mapping; and caching the mapping relationship in the synchronization information, such that an access authorization request message belonging to a 5G network is forwarded to the PCF network element according to the mapping relationship in the case of receiving the access authorization request message belonging to the 5G network.

In a third aspect, an embodiment of this application further provides a network element. The network element includes: a memory, a processor and a computer program which is stored in the memory and is operable on the processor, wherein the processor implements the information processing method described in the first aspect or the information processing method described in the second aspect when executing the computer program.

In a fourth aspect, an embodiment of this application further provides a computer-readable storage medium that stores a computer-executable instruction therein for performing the above information processing methods.

Other features and advantages of this application will be set forth in the following description, and in part will be apparent from the description, or may be learned by practice of this application. The objectives and other advantages of the invention may be realized and attained by the structures particularly pointed out in the description, claims and the accompanying drawings.

### BRIEF DESCRIPTION OF DRAWINGS

The accompanying drawings, which are included to provide a further understanding of the technical solution of this application and constitute a part of the description, are intended to illustrate the technical solution of this application together with the embodiments of this application, and do not constitute a limitation on the technical solutions of this application.
FIG. 1 is a schematic diagram of a network topology for executing an information processing method according to an embodiment of this application;
FIG. 2 is a flowchart of an information processing method applied to a BSF network element provided by an embodiment of this application;
FIG. 3 is a schematic diagram of a message format of synchronization information provided by an embodiment of this application;
FIG. 4 is a flowchart of an information processing method applied to a DRA network element provided by an embodiment of this application; and
FIG. 5 is a flowchart of an information processing method provided by an embodiment of this application.

### DETAILED DESCRIPTION

In order to make the objectives, technical solutions and advantages of the present invention more clearly understood, the present invention will be further described in detail in conjunction with the accompanying drawings and embodiments. It should be understood that the specific embodiments described herein are only used to explain this application, but not to limit this application.

It should be noted that although the functional module division is performed in the schematic diagrams of a device, a logical order is shown in the flowchart, but in some cases, the steps shown or described may be performed in a different order than the module division in the device or than an order in the flowchart. It should be noted that the terms "first", "second" and the like in the description and claims, as well as the above-mentioned drawings, are used to distinguish similar objects, but not necessarily used to describe a specific order or precedence order.

This application provides an information processing method, a network element and a computer-readable storage medium. The information processing method includes: receiving, by a BSF network element, 5G session binding information sent by a PCF network element; mapping the 5G session binding information to generate 4G session binding information; next, generating synchronization information that describes a mapping relationship between the 5G session binding information and the 4G session binding information; and then, sending the synchronization information to a DRA network element through an existing synchronization interface, such that the BSF network element and the DRA network element can synchronously store the mapping relationship between the 5G session binding information and the 4G session binding information. However, when a user belonging to the 5G network initiates a call service and the DRA network element receives an access authorization request message belonging to the 5G network, the DRA network element can determine a PCF network element corresponding to the access authorization request message by using the mapping relationship between the 5G session binding information and the 4G session binding information, so that the access authorization request message can be forwarded to the PCF network element. That is, the technical solution provided in this application can enable the call service belonging to the 5G network to be addressed to the PCF network element without upgrading and transforming the DRA network element.

The embodiments of this application are further elaborated below in conjunction with the accompanying drawings.

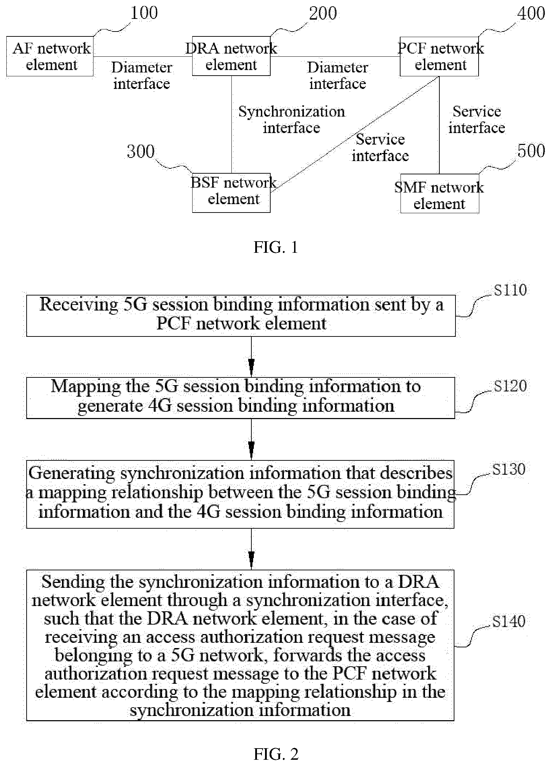

FIG. 1 is a schematic diagram of a network topology for executing an information processing method according to an embodiment of this application. In the example of FIG. 1, the network topology includes an application function (AF) network element 100, a DRA network element 200, a BSF network element 300, a PCF network element 400 and a session management function (SMF) network element 500, wherein the AF network element 100 and the DRA network element 200 are connected through a Diameter interface; the DRA network element 200 and the PCF network element 400 are connected through a Diameter interface; the DRA network element 200 and the BSF network element 300 are connected through a synchronization interface; the BSF network element 300 and the PCF network element 400 are connected through a service interface; and the PCF network element 400 and the SMF network element 500 are connected through a service interface. In addition, the AF network element 100 may be a session border controller (SBC) network element belonging to the 4G network, or a proxy-call session control function (PCSCF) network element belonging to the 5G network, or other application function network element, which will not be specifically limited in this embodiment. When a user terminal belonging to the 5G network, while initiating a voice over long-term evolution call service, can trigger the SBC network element to query the DRA network element 200 for related session binding information.

The DRA network element 200 and the BSF network element 300 respectively include a memory and a processor, wherein the memory and the processor may be connected through a bus or other means.

The memory, as a non-transient computer-readable storage medium, can be configured to store a non-transient software program and a non-transient computer-executable program. In addition, the memory may include a high-speed random-access memory, and may further include a non-transient memory, such as at least one magnetic disk storage device, a flash memory device, or other non-transient solid-state storage devices. In some embodiments, the memory may further include a memory remotely provided with respect to the processor. These remote memories may be connected to the processor via a network. Examples of the networks include, but are not limited to, the Internet, an intranet, a local area network, a mobile communication network, and combinations thereof.

The network topology and application scenarios described in the embodiments of this application are intended to more clearly illustrate the technical solutions of the embodiments of this application, and do not constitute a limitation to the technical solutions provided by the embodiments of this application. Those skilled in the art may know that with the evolution of the network topology and the emergence of new application scenarios, the technical solutions provided by the embodiments of this application are also applicable to similar technical problems.

It will be understood by those skilled in the art that the network topology structure shown in FIG. 1 does not constitute a limitation to the embodiments of this application, and may include more or less components than those illustrated, or combine some components or adopt different component arrangements.

In the network topology shown in FIG. 1, the DRA network element 200 and the BSF network element 300 may separately call the information processing programs stored therein to execute the information processing method.

Based on the structure of the above network topology, various embodiments of the information processing methods of this application are proposed.

As shown in FIG 2 which is a flowchart of an information processing method applied to a BSF network element provided by an embodiment of this application, the information processing method includes, but is not limited to, a step S110, a step S120, a step S130 and a step S140.

In S110, 5G session binding information sent by a PCF network element is received.

In one embodiment, when a user terminal belonging to the 5G network comes online, an SMF network element will be triggered to initiate a protocol data unit (PDU) session establishment request to the PCF network element, and the PCF network element will accept this establishment request and establish a PDU session for the user terminal. After the PDU session is established, the PCF network element can send 5G session binding information of the successfully established PDU session to the BSF network element via a hypertext transfer protocol (HTTP) message by using the service interface provided by the BSF network element.

In one embodiment, the 5G session binding information includes, but is not limited to, a subscriber permanent identifier (SUPI), a generic public subscription identifier (GPSI), an IP address of the user terminal and a full qualified domain name (FQDN) of the corresponding PCF network element, and other information.

In S120, the 5G session binding information is mapped to generate 4G session binding information.

In one embodiment, when the BSF network element receives the 5G session binding information sent by the PCF network element, the BSF network element will store this 5G session binding information, such that relevant operation processing can be performed according to the 5G session binding information.

Those skilled in the art can understand that when a user belonging to a 4G network initiates a VoLTE call service, an SBC network element can be triggered to query the DRA network element for related 4G session binding information, the 4G session binding information including, but not limited to, an international mobile subscriber identity (IMSI), a mobile subscriber international integrated service digital network number (MSISDN), an IP address of the user terminal, and a domain name of a PCRF network element, and other information. By comparing respective information in the 4G session binding information with respective information in the 5G session binding information, the following results can be obtained: the information such as the IMSI, the MSISDN and the domain name of the PCRF network element in the 4G session binding information may correspond to the information such as SUPI, GPSI and FQDN of the PCF network element in the 5G session binding information, respectively. Therefore, the 5G session binding information and the 4G session binding information can be mapped to each other.

In some cases in this art, the DRA network elements in the 4G network are generally deployed in pairs, and a session synchronization function is enabled between the two DRA network elements, which ensures that data between the two DRA network elements can be consistent. As a session binding function entity in the 5G network, in order to avoid a single-point failure, the BSF network element inevitably has a function of disaster recovery backup, that is, two BSF network elements need to be used, and data between the two BSF network elements has a synchronization function. In other words, both BSF and DRA elements have session data synchronization functions. Combined with the conclusion in which the 5G session binding information and the 4G session binding information can be mapped to each other, a mapping relationship between the 5G session binding information and the 4G session binding information can be synchronously stored in the BSF network element and the DRA network element. When the user belonging to the 5G network initiates a VoLTE call service, he/she only needs to query the DRA network element for related session binding information, i.e., the required 5G session binding information, so that the corresponding PCF network element can be addressed according to the obtained 5G session binding information.

Based on the above principle, in this embodiment, after the BSF network element receives the 5G session binding information sent by the PCF network element, the BSF network element will map the 5G session binding information to generate the corresponding 4G session binding information, so that the relevant processing operations can be performed according to the mapping relationship between the 5G session binding information and the 4G session binding information in subsequent steps.

In S130, synchronization information that describes the mapping relationship between the 5G session binding information and the 4G session binding information is generated.

In one embodiment, after mapping the 5G session binding information to generate the 4G session binding information, the BSF network element may generate the synchronization information that describes the mapping relationship between the 5G session binding information and the 4G session binding information, such that the BSF network element and the DRA network element can synchronously store the mapping relationship between the 5G session binding information and the 4G session binding information by sending the synchronization information to the DRA network element in subsequent steps.

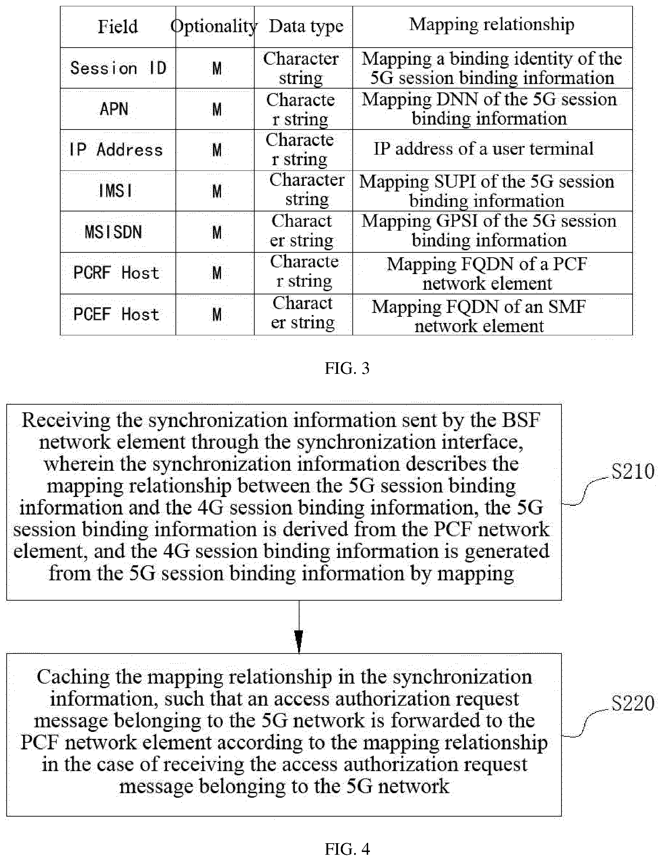

In one embodiment, the 5G session binding information includes first identification information, the 4G session binding information includes second identification information, the synchronization information includes a mapping field, and the mapping field is configured to describe a mapping relationship between the first identification information and the second identification information. The first identification information may include different identification information, for example, may include a binding identity of the 5G session binding information, DNN, an IP address of the user terminal, GPSI, FQDN of the PCF network element, FQDN of the SMF network element and other information, which will not be specifically limited in this embodiment. In addition, the second identification information may include different identification information, for example, may include a session identity of the 4G session binding information, the IP address of the user terminal, IMSI, a domain name of a PCRF network element, a domain name of a PCEF network element and other information, which will not be specifically limited in this embodiment. In addition, the synchronization information may include a mapping field which may be used to describe the mapping relationship between the first identification information and the second identification information. Further, the synchronization information may also include an identification field which may be used to describe each second identification information in the 4G session binding information. In some examples, referring to FIG. 3 which shows a message format of the synchronization information, the synchronization information mainly includes the following content:
a Session ID field, which belongs to the identification field and is used to represent a session identity in the 4G session binding information, wherein a mapping field corresponding to the Session ID field is described as: being mapped as a binding ID in the 5G session binding information;
an APN field, which belongs to the identification field and is used to represent an access point name in the 4G session binding information, wherein a mapping field corresponding to the APN field is described as: being mapped as a data network name (DNN) in the 5G session binding information;
an IP Address field, which belongs to the identification field and is used to represent an IP address in the 4G session binding information, wherein a mapping field corresponding to the IP Address field is described as: being mapped as an IP address of the user terminal in the 5G session binding information;
an IMSI field, which belongs to the identification field and is used to represent IMSI in the 4G session binding information, wherein a mapping field corresponding to the IMSI field is described as: being mapped as SUPI in the 5G session binding information;
an MSISDN field, which belongs to the identification field and is used to represent MSISDN in the 4G session binding information, wherein a mapping field corresponding to the MSISDN field is described as: being mapped as GPSI in the 5G session binding information;
a PCRF Host field, which belongs to the identification field and is used to represent a domain name of a PCRF network element in the 4G session binding information, wherein a mapping field corresponding to the PCRF Host field is described as: being mapped as FQDN of a PCF network element in the 5G session binding information; and
a PCEF Host field, which belongs to the identification field and is used to represent a domain name of a PCRF network element in the 4G session binding information, wherein a mapping field corresponding to the PCEF Host field is described as: being mapped as FQDN of an SMF network element.

It is worth noting that in the message format of the synchronization information shown in FIG. 3, the optionality of M means that the content of the corresponding field is optional, and the corresponding field can be carried in the synchronization information.

In S140, by sending the synchronization information to the DRA network element by means of a synchronization interface, the DRA network element, in the case of receiving an access authorization request message belonging to the 5G network, forwards the access authorization request message belonging to the 5G network to the PCF network element according to the mapping relationship in the synchronization information.

In one embodiment, the BSF network element generates the synchronization information that describes the mapping relationship between the 5G session binding information and the 4G session binding information, and then synchronizes the mapping relationship between the 5G session binding information and the 4G session binding information to the DRA network element through the existing synchronization interface. It is worth noting that the synchronization interface is an original functional interface of the DRA network element, so there is no need to upgrade and transform the DRA network element when executing S140. After the DRA network element receives the synchronization information, the DRA network element can not only store session binding data of a 4G user terminal, but also store session binding data of a 5G user terminal. Therefore, when the user terminal belonging to the 5G network initiates a call service and the DRA network element receives the access authorization request message belonging to the 5G network, the DRA network element can query the corresponding 5G session binding information according to an IP address of a user terminal carried in the access authorization request message (those skilled in the art can understand that the access authorization request message received by the DRA network element originally carries the IP address of the user terminal), as well as session binding data of a 4G user terminal and session binding data of a 5G user terminal which are stored in the DRA network element, and then obtain the PCF network element belonging to the user terminal, such that the access authorization request message can be forwarded to the corresponding PCF network element. Since a newly introduced service interface between the BSF network element and the DRA network element no longer needs to be used in the 5G network, instead of using the traditional synchronization interface to implement the synchronous processing of the session binding data, the existing functions of the DRA network element can be fully utilized, thus avoiding the upgrade and transformation of the DRA network element.

In one embodiment, the BSF network element and the DRA network element synchronously store the 5G session binding information and the 4G session binding information through the existing synchronization interface by adopting the information processing method including the steps S110, S120, S130 and S140. Therefore, when the user terminal belonging to the 5G network initiates a call service and the DRA network element receives the access authorization request message belonging to the 5G network, the DRA network element can determine a PCF network element corresponding to the access authorization request message by using the mapping relationship between the stored 5G session binding information and 4G session binding information, so that the access authorization request message can be forwarded to the corresponding PCF network element. Thus, the information processing method of this embodiment can be configured such that the call service belonging to the 5G network can be addressed to the corresponding PCF network element without upgrading and transforming the DRA network element.

In addition, in some cases in this art, every time the user terminal initiates a service call, the DRA network element is required to query the BSF network element for related session binding information, thereby increasing the user's call waiting time, resulting in the reduction of the user's experience. In this embodiment, since the BSF network element and the DRA network element realize the synchronous storage of the 5G session binding information and the 4G session binding information through the existing synchronization interface, there is no need to query the related session binding information between the BSF network element and the DRA network element by adding a newly provided service interface, which can reduce the time for the DRA network element to wait to query the BSF network element for the related session binding information through the service interface, thereby increasing a forwarding speed of messages and enhancing the user's experience. In addition, since the DRA network element stores the 5G session binding information and the 4G session binding information therein, all subsequent call services do not need to query the BSF network element for the related session binding information during a user session existence period, so the network overhead can be saved, which can reduce the user's call connection time, and thus improve the user experience.

Further, in one embodiment, prior to performing S140, the information processing method may further include the following step:
establishing a synchronization link with the DRA network element through the synchronization interface.

In one embodiment, before the BSF network element sends, to the DRA network element, the synchronization information that describes the mapping relationship between the 5G session binding information and the 4G session binding information, the BSF network element and the DRA network element can establish the synchronization link therebetween through the synchronization interface in advance, which can reduce the waiting time and improve the time for synchronous storage of the 5G session binding information and the 4G session binding information between the BSF network element and the DRA network element.

In one embodiment, the synchronization link may be a stream control transmission protocol (SCTP) link, or a transmission control protocol (TCP) link, which will not be specifically limited in this embodiment.

Further, in one embodiment, the information processing method may further include the following step:
deleting the 5G session binding information in response to an SMF network element being offline, and notifying the DRA network element to delete the 4G session binding information through the synchronization interface.

In one embodiment, when the user terminal ends the current VoLTE call service, that is, after the user terminal goes offline, the SMF network element will be offline accordingly. In addition, the SMF network element triggers the BSF network element to delete 5G session binding information corresponding to the current VoLTE call service. At this time, in the case that the BSF network element deletes the corresponding 5G session binding information, the BSF network element will also notify the DRA network element to delete the corresponding 4G session binding information through the synchronization interface, so that the BSF network element and the DRA network element can release storage spaces synchronously.

In addition, another embodiment of this application further provides an information processing method. As shown in FIG 4 which is a flowchart of an information processing method applied to a DRA network element provided by an embodiment of this application, the information processing method includes, but is not limited to, a step S210 and a step S220.

In S210, the synchronization information sent by the BSF network element is received through the synchronization interface, wherein the synchronization information describes the mapping relationship between the 5G session binding information and the 4G session binding information, the 5G session binding information is derived from the PCF network element, and the 4G session binding information is generated from the 5G session binding information by mapping.

In one embodiment, when a user terminal belonging to the 5G network comes online, the SMF network element will be triggered to initiate a PDU unit (PDU) session establishment request to the PCF network element, and the PCF network element will accept this establishment request and establish a PDU session for the user terminal. After the PDU session is established, the PCF network element can send 5G session binding information of the successfully established PDU session to the BSF network element via a HTTP protocol (HTTP) message by using the service interface provided by the BSF network element. After the BSF network element receives the 5G session binding information, the BSF network element can map the 5G session binding information to generate the 4G session binding information, and then the BSF network element can generate the synchronization information that describes the mapping relationship between the 5G session binding information and the 4G session binding information, and send the synchronization information to the DRA network element through the synchronization interface. After the DRA network element receives the synchronization information sent by the BSF network element through the synchronization interface, the DRA network element can store the 5G session binding information and the 4G session binding information, which correspond to each other, according to the synchronization information, so that in the case of receiving the access authorization request message belonging to the 5G network in the subsequent steps, the DRA network element can forward the access authorization request message to the corresponding PCF network element according to the mapping relationship between the 5G session binding information and the 4G session binding information.

In one embodiment, the 5G session binding information includes first identification information, the 4G session binding information includes second identification information, the synchronization information includes a mapping field, and the mapping field is configured to describe a mapping relationship between the first identification information and the second identification information. The first identification information may include different identification information, for example, may include a binding identity of the 5G session binding information, DNN, an IP address of the user terminal, GPSI, FQDN of the PCF network element, FQDN of the SMF network element and other information, which will not be specifically limited in this embodiment. In addition, the second identification information may include different identification information, for example, may include a session identity of the 4G session binding information, the IP address of the user terminal, IMSI, a domain name of a PCRF network element, a domain name of a PCEF network element and other information, which will not be specifically limited in this embodiment. In addition, the synchronization information may include a mapping field which may be used to describe the mapping relationship between the first identification information and the second identification information. Further, the synchronization information may also include an identification field which may be used to describe each second identification information in the 4G session binding information.

It is worth noting that a message format of the synchronization information in this embodiment and a specific meaning of each field in the message format are consistent with a message format of the synchronization information in the embodiment shown in FIG. 3 and a specific meaning of each field in the message format. The explanation for the message format of the synchronization information in this embodiment and for the specific meaning of each field in the message format may refer to the relevant explanation for the message format of the synchronization information and the specific meaning of each field in the message format shown in FIG. 3, and will not be repeated herein.

It is worth noting that the synchronization interface is an original functional interface of the DRA network element, so there is no need to upgrade and transform the DRA network element when executing S210.

In S220, the mapping relationship in the synchronization information is cached, such that an access authorization request message belonging to the 5G network is forwarded to the PCF network element according to the mapping relationship in the case of receiving the access authorization request message belonging to the 5G network.

In one embodiment, after the DRA network element receives the synchronization information sent by the BSF network element through the synchronization interface, the DRA network element may cache the mapping relationship in the synchronization information. That is, the DRA network element can not only store session binding data of a 4G user terminal, but also store session binding data of a 5G user terminal. Therefore, when the user terminal belonging to the 5G network initiates a call service and the DRA network element receives the access authorization request message belonging to the 5G network, the DRA network element can query the corresponding 5G session binding information according to an IP address of a user terminal carried in the access authorization request message (those skilled in the art can understand that the access authorization request message received by the DRA network element originally carries the IP address of the user terminal), as well as session binding data of a 4G user terminal and session binding data of a 5G user terminal which are stored in the DRA network element, and then obtain the PCF network element belonging to the user terminal, such that the access authorization request message can be forwarded to the corresponding PCF network element. Since a newly introduced service interface between the DRA network element and the BSF network element no longer needs to be used in the 5G network, instead of using the traditional synchronization interface to implement the synchronous processing of the session binding data, the existing functions of the DRA network element can be fully utilized, thus avoiding the upgrade and transformation of the DRA network element.

In one embodiment, the DRA network element and the DRA network element synchronously store the 5G session binding information and the 4G session binding information through the existing synchronization interface by adopting the information processing method including the steps S210 and S220. Therefore, when a user terminal belonging to the 5G network initiates a call service and the DRA network element receives the access authorization request message belonging to the 5G network, the DRA network element can determine a PCF network element corresponding to the access authorization request message by using the mapping relationship between the stored 5G session binding information and 4G session binding information, so that the access authorization request message can be forwarded to the corresponding PCF network element. Thus, the information processing method of this embodiment can be configured such that the call service belonging to the 5G network can be addressed to the corresponding PCF network element without upgrading and transforming the DRA network element.

In addition, in some cases in this art, every time the user terminal initiates a service call, the DRA network element is required to query the BSF network element for the related session binding information, thereby increasing the user's call waiting time, resulting in the reduction of the user's experience. In this embodiment, since the DRA network element and the BSF network element realize the synchronous storage of the 5G session binding information and the 4G session binding information through the existing synchronization interface, there is no need to query the related session binding information between the BSF network element and the DRA network element by adding a newly provided service interface, which can reduce the time for the DRA network element to wait to query the BSF network element for the related session binding information through the service interface, thereby increasing a forwarding speed of messages and enhancing the user's experience. In addition, since the DRA network element stores the 5G session binding information and the 4G session binding information, all subsequent call services do not need to query the BSF network element for the related session binding information during a user session existence period, so the network overhead can be saved, which can reduce the user's call connection time, and thus improve the user experience.

Further, in one embodiment, prior to performing S210, the information processing method may further include the following step:
establishing a synchronization link with the BSF network element through the synchronization interface.

In one embodiment, before the DRA network element receives the synchronization information that describes the mapping relationship between the 5G session binding information and the 4G session binding information and is sent by the BSF network element through the synchronization interface, the DRA network element and the BSF network element can establish the synchronization link therebetween through the synchronization interface in advance, which can reduce the waiting time and improve the time for synchronous storage of the 5G session binding information and the 4G session binding information between the DRA network element and the BSF network element.

In one embodiment, the synchronization link may be a SCTP protocol link, or a TCP protocol link, which will not be specifically limited in this embodiment.

Further, in one embodiment, the information processing method may further include the following step:
deleting the 4G session binding information in response to receiving a deletion notification message sent by the BSF network element through the synchronization interface.

In one embodiment, when the user terminal ends the current VoLTE call service, that is, after the user terminal goes offline, the SMF network element will be offline accordingly. In addition, the SMF network element triggers the BSF network element to delete 5G session binding information corresponding to the current VoLTE call service. At this time, in the case that the BSF network element deletes the corresponding 5G session binding information, the BSF network element will also send the deletion notification message to the DRA network element through the synchronization interface; and DRA network element will delete the corresponding 4G session binding information after receiving the deletion notification message, so that the DRA network element and the BSF network element can release storage spaces synchronously.

The information processing methods provided by the above embodiments will be described below in detail with specific examples.

### Example I:

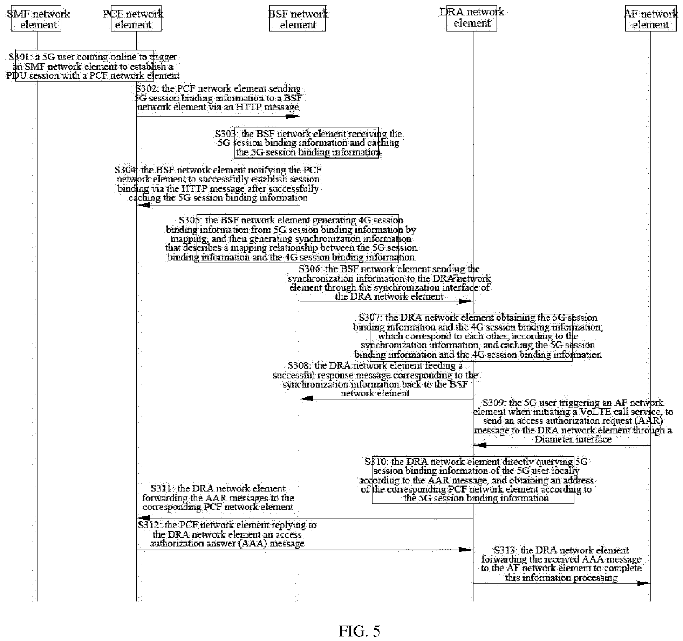

As shown in FIG 5 which is a flowchart of an information processing method provided by a specific example of this application, the information processing method include the following steps:
S301: a 5G user coming online to trigger an SMF network element to establish a PDU session with a PCF network element;
S302: the PCF network element sending 5G session binding information to a BSF network element via an HTTP message;
S303: the BSF network element receiving the 5G session binding information and caching the 5G session binding information;
S304: the BSF network element notifying the PCF network element to successfully establish session binding via the HTTP message after successfully caching the 5G session binding information;
S305: the BSF network element generating 4G session binding information from 5G session binding information by mapping, and then generating synchronization information that describes a mapping relationship between the 5G session binding information and the 4G session binding information;
S306: the BSF network element sending the synchronization information to the DRA network element through the synchronization interface of the DRA network element;
S307: the DRA network element obtaining the 5G session binding information and the 4G session binding information, which correspond to each other, according to the synchronization information, and caching the 5G session binding information and the 4G session binding information;
S308: the DRA network element feeding a successful response message corresponding to the synchronization information back to the BSF network element;
S309: the 5G user triggering an AF network element when initiating a VoLTE call service, to send an access authorization request (AAR) message to the DRA network element through a Diameter interface;
S310: the DRA network element directly querying 5G session binding information of the 5G user locally according to the AAR message, and obtaining an address of the corresponding PCF network element according to the 5G session binding information;
S311: the DRA network element forwarding the AAR messages to the corresponding PCF network element;
S312: the PCF network element replying to the DRA network element an access authorization answer (AAA) message; and
S313: the DRA network element forwarding the received AAA message to the AF network element to complete this information processing.

It is worth noting that the 5G user can directly query the corresponding session binding information locally from the DRA network element when initiating VoLTE call services multiple times sequentially, and there is no need to query the BSF network element for related session binding information each time, which can reduce the subsequent information processing process to achieve the purpose of reducing the user's call connection time, thereby improving the user's user experience.

In addition, an embodiment of this application further provides a network element. The network element includes a memory, a processor and a computer program which is stored in the memory and operable on the processor.

The processor and the memory can be connected by bus or other means.

It should be noted that the network element in this embodiment may be applied to the BSF network element or DRA network element in the embodiment shown in FIG. 1. The network elements in this embodiment may form part of the network topology in the embodiment shown in FIG. 1. These embodiments are all of the same invention idea, and have the same implementation principle and technical effects, which will not be described in detail herein.

The non-transient software programs and instructions required to implement the information processing methods of the above embodiments are stored in the memory, which, when executed by the processor, perform the information processing method applied to the BSF network element in the above embodiment, for example, preform the method steps S110 to S140 described in FIG. 2; or perform the information processing method applied to the DRA network element in the above embodiment, for example, perform the method steps S210 to S220 described in FIG. 4.

The device embodiments described above are merely illustrative, wherein the units described as separate components may or may not be physically separated, i.e., may be located in one place, or may also be distributed on a plurality of network units. Part or all of the modules can be selected according to actual needs to achieve the object of the solution of this embodiment.

Further, one embodiment of this application also provides a computer-readable storage medium which stores computer-executable instructions therein. The computer-executable instructions are executed by one processor or controller, e.g., by one processor in the network element embodiment as described above, such that the processor performs the information processing method applied to the BSF network element in the above embodiment, for example, preform the method steps S110 to S140 described in FIG. 2; or perform the information processing method applied to the DRA network element in the above embodiment, for example, perform the method steps S210 to S220 described in FIG. 4.

Embodiments of this application includes: receiving, by the BSF network element, the 5G session binding information sent by the PCF network element; mapping the 5G session binding information to generate 4G session binding information; next, generating synchronization information that describes a mapping relationship between the 5G session binding information and the 4G session binding information; and then, sending the synchronization information to the DRA network element through the synchronization interface, such that the DRA network element, in the case of receiving an access authorization request message belonging to a 5G network, forwards the access authorization request message to the PCF network element according to the mapping relationship in the synchronization information. According to the solutions provided by the embodiments of this application, the BSF network element sends, to the DRA network element, synchronization information that describes the mapping relationship between the 5G session binding information and the 4G session binding information through the existing synchronization interface. Therefore, the DRA network element can save the mapping relationship between the 5G session binding information and the 4G session binding information. Therefore, when the user terminal belonging to the 5G network initiates a call service and the DRA network element receives the access authorization request message belonging to the 5G network, the DRA network element can determine a PCF network element corresponding to the access authorization request message by using the mapping relationship between the stored 5G session binding information and 4G session binding information, so that the access authorization request message can be forwarded to the PCF network element. Therefore, the solutions provided by the embodiments of this application can be addressed to the PCF network element without upgrading and transforming the DRA network element.

A person of ordinary skill in the art shall understand that all or some of the steps and systems in the methods disclosed above can be implemented as software, firmware, hardware and their appropriate combination. Some physical components or all physical components can be implemented as software executed by a processor, such as a central processing unit, a digital signal processor, or a microprocessor, or as hardware, or as an integrated circuit, such as an application specific integrated circuit. Such software may be distributed on a computer-readable medium, and the computer-readable medium may include a computer storage medium (or a non-transitory medium) and a communication medium (or a transitory medium).It is well-known to a person of ordinary skill in the art that the term "computer storage medium" includes volatile and nonvolatile, removable and non-removable mediums implemented by any method or technology for storing the information, such as, computer readable instructions, data structures, program modules or other data. The computer-readable storage medium includes, but is not limited to an RAM, an ROM, a flash memory or other memory techniques; a CD-ROM, a digital video disk (DVD) or other optical storage; a tape cartridge, a magnetic tape, a disk storage or other magnetic storage devices; or any other medium that may be configured to store desired information and may be accessed by a computer. In addition, as is well known to those of ordinary skill in the art, communication media usually contain computer-readable instructions, data structures, computer program modules, or other data in a modulated data signal such as a carrier wave or other transmission mechanism, and may include any information delivery medium.

## Claims

1. An information processing method, performed by a BSF network element (300), the method comprising:
receiving 5G session binding information sent by a PCF network element (400) (S 110);
mapping the 5G session binding information to 4G session binding information to generate the 4G session binding information (S120);
generating synchronization information that describes a mapping relationship between the 5G session binding information and the 4G session binding information (S130);
sending the synchronization information to a DRA network element (200) by means of a synchronization interface, such that the DRA network element (200), in the case of receiving an access authorization request message belonging to a 5G network, forwards the access authorization request message belonging to the 5G network to the PCF network element (400) according to the mapping relationship in the synchronization information (S140).

2. The information processing method of claim 1, wherein the 5G session binding information comprises first identification information, the 4G session binding information comprises second identification information, the synchronization information comprises a mapping field, and the mapping field is configured to describe a mapping relationship between the first identification information and the second identification information.

3. The information processing method of claim 1, prior to sending the synchronization information to the DRA network element (200) through the synchronization interface, further comprising:
establishing a synchronization link with the DRA network element (200) through the synchronization interface.

4. The information processing method of any one of claims 1 to 3, further comprising:
deleting the 5G session binding information in response to a session management function SMF network element (500) being offline, and notifying the DRA network element (200) to delete the 4G session binding information through the synchronization interface.

5. An information processing method performed by a DRA network element (200), comprising:
receiving synchronization information sent by a BSF network element (300) through a synchronization interface, wherein the synchronization information describes a mapping relationship between 5G session binding information and 4G session binding information, the 5G session binding information is derived from a PCF network element (400), and the 4G session binding information is generated from the 5G session binding information by mapping the 5G session binding information to the 4G session binding information (S210); and
caching the mapping relationship in the synchronization information, such that an access authorization request message belonging to a 5G network is forwarded to the PCF network element (400) according to the mapping relationship in the case of receiving the access authorization request message belonging to the 5G network (S220).

6. The information processing method of claim 5, wherein the 5G session binding information comprises first identification information, the 4G session binding information comprises second identification information, the synchronization information comprises a mapping field, and the mapping field is configured to describe a mapping relationship between the first identification information and the second identification information.

7. The information processing method of claim 5, prior to receiving the synchronization information sent by the BSF network element (300) through the synchronization interface, further comprising:
establishing a synchronization link with the BSF network element (300) through the synchronization interface.

8. The information processing method of any one of claims 5 to 7, further comprising:
deleting the 4G session binding information in response to receiving a deletion notification message sent by the BSF network element (300) through the synchronization interface.

9. A network element, comprising: a memory, a processor, and a computer program which is stored in the memory and is operable on the processor, wherein the processor is configured to perform the information processing method of any one of claims 1 to 4 or the information processing method of any one of claims 5 to 8 when executing the computer program.

10. A computer-readable storage medium comprising instructions which, when executed by a computer, cause the computer to perform the information processing method of any one of claims 1 to 4 or the information processing method of any one of claims 5 to 8.

## Patentansprüche

1. Informationsverarbeitungsverfahren, durchgeführt von einem BSP-Netzelement (300), das Verfahren umfassend:
Empfangen von 5G-Sitzungsbindungsinformationen, die von einem PCP-Netzelement (400) gesendet werden (S110);
Zuordnen der 5G-Sitzungsbindungsinformationen zu 4G-Sitzungsbindungsinformationen, um die 4G-Sitzungsbindungsinformationen zu erzeugen (S120);
Erzeugen von Synchronisationsinformationen, die eine Zuordnungsbeziehung zwischen den 5G-Sitzungsbindungsinformationen und den 4G-Sitzungsbindungsinformationen beschreiben (S130);
Senden der Synchronisationsinformationen an ein DRA-Netzelement (200) mittels einer Synchronisationsschnittstelle, sodass das DRA-Netzelement (200) im Fall eines Empfangens einer Zugangsberechtigungsanforderungsnachricht, die zu einem 5G-Netz gehört, die zu dem 5G-Netz gehörende Zugangsberechtigungsanforderungsnachricht an das PCP-Netzelement (400) gemäß der Zuordnungsbeziehung in den Synchronisationsinformationen weiterleitet (S140).

2. Informationsverarbeitungsverfahren nach Anspruch 1, wobei die 5G-Sitzungsbindungsinformationen erste Identifikationsinformationen umfassen, die 4G-Sitzungsbindungsinformationen zweite Identifikationsinformationen umfassen, die Synchronisationsinformationen ein Zuordnungsfeld umfassen und das Zuordnungsfeld konfiguriert ist, um eine Zuordnungsbeziehung zwischen den ersten Identifikationsinformationen und den zweiten Identifikationsinformationen zu beschreiben.

3. Informationsverarbeitungsverfahren nach Anspruch 1, das vor einem Senden der Synchronisationsinformationen an das DRA-Netzelement (200) über die Synchronisationsschnittstelle ferner Folgendes umfasst:
Herstellen einer Synchronisationsverbindung mit dem DRA-Netzelement (200) über die Synchronisationsschnittstelle.

4. Informationsverarbeitungsverfahren nach einem der Ansprüche 1 bis 3, ferner umfassend:
Löschen der 5G-Sitzungsbindungsinformationen als Reaktion darauf, dass ein SMP-Netzelement (500) mit Sitzungsverwaltungsfunktion offline ist, und Benachrichtigen des DRA-Netzelements (200) zum Löschen der 4G-Sitzungsbindungsinformationen über die Synchronisationsschnittstelle.

5. Informationsverarbeitungsverfahren, das von einem DRA-Netzelement (200) durchgeführt wird, umfassend:
Empfangen von Synchronisationsinformationen, die von einem BSP-Netzelement (300) über eine Synchronisationsschnittstelle gesendet werden, wobei die Synchronisationsinformationen eine Zuordnungsbeziehung zwischen 5G-Sitzungsbindungsinformationen und 4G-Sitzungsbindungsinformationen beschreiben, die 5G-Sitzungsbindungsinformationen von einem PCP-Netzelement (400) abgeleitet sind und die 4G-Sitzungsbindungsinformationen aus den 5G-Sitzungsbindungsinformationen durch Zuordnen der 5G-Sitzungsbindungsinformationen zu den 4G-Sitzungsbindungsinformationen erzeugt werden (S210); und
Zwischenspeichern der Zuordnungsbeziehung in den Synchronisationsinformationen, sodass eine zu einem 5G-Netz gehörende Zugangsberechtigungsanforderungsnachricht gemäß der Zuordnungsbeziehung an das PCP-Netzelement (400) weitergeleitet wird, wenn die zu dem 5G-Netz gehörende Zugangsberechtigungsanforderungsnachricht empfangen wird (S220).

6. Informationsverarbeitungsverfahren nach Anspruch 5, wobei die 5G-Sitzungsbindungsinformationen erste Identifikationsinformationen umfassen, die 4G-Sitzungsbindungsinformationen zweite Identifikationsinformationen umfassen, die Synchronisationsinformationen ein Zuordnungsfeld umfassen und das Zuordnungsfeld konfiguriert ist, um eine Zuordnungsbeziehung zwischen den ersten Identifikationsinformationen und den zweiten Identifikationsinformationen zu beschreiben.

7. Informationsverarbeitungsverfahren nach Anspruch 5, das vor Empfangen der von dem BSP-Netzelement (300) über die Synchronisationsschnittstelle gesendeten Synchronisationsinformationen ferner Folgendes umfasst:
Herstellen einer Synchronisationsverbindung mit dem BSP-Netzelement (300) über die Synchronisationsschnittstelle.

8. Informationsverarbeitungsverfahren nach einem der Ansprüche 5 bis 7, ferner umfassend:
Löschen der 4G-Sitzungsbindungsinformationen als Reaktion auf ein Empfangen einer Löschungsbenachrichtigungsnachricht, die von dem BSP-Netzelement (300) über die Synchronisationsschnittstelle gesendet wird.

9. Netzelement, umfassend: einen Speicher, einen Prozessor und ein Computerprogramm, das in dem Speicher gespeichert ist und auf dem Prozessor betreibbar ist, wobei der Prozessor konfiguriert ist, um das Informationsverarbeitungsverfahren nach einem der Ansprüche 1 bis 4 oder das Informationsverarbeitungsverfahren nach einem der Ansprüche 5 bis 8 durchzuführen, wenn das Computerprogramm ausgeführt wird.

10. Computerlesbares Speichermedium, umfassend Befehle, die, wenn sie von einem Computer ausgeführt werden, den Computer veranlassen, das Informationsverarbeitungsverfahren nach einem der Ansprüche 1 bis 4 oder das Informationsverarbeitungsverfahren nach einem der Ansprüche 5 bis 8 durchzuführen.

## Revendications

1. Procédé de traitement d'informations, exécuté par un élément de réseau BSF (300), le procédé comprenant :
la réception des informations de liaison de session 5G envoyées par un élément de réseau PCF (400) (S110) ;
la mise en correspondance des informations de liaison de session 5G avec les informations de liaison de session 4G afin de générer les informations de liaison de session 4G (S 120) ;
la génération d'informations de synchronisation qui décrivent une relation de correspondance entre les informations de liaison de session 5G et les informations de liaison de session 4G (S130);
l'envoi des informations de synchronisation à un élément de réseau DRA (200) au moyen d'une interface de synchronisation, de sorte que l'élément de réseau DRA (200), en cas de réception d'un message de demande d'autorisation d'accès appartenant à un réseau 5G, transmette le message de demande d'autorisation d'accès appartenant au réseau 5G à l'élément de réseau PCF (400) conformément à la relation de correspondance dans les informations de synchronisation (S140).

2. Procédé de traitement d'informations selon la revendication 1, dans lequel les informations de liaison de session 5G comprennent les premières informations d'identification, les informations de liaison de session 4G comprennent les deuxièmes informations d'identification, les informations de synchronisation comprennent un champ de correspondance, et le champ de correspondance est configuré pour décrire une relation de correspondance entre les premières informations d'identification et les deuxièmes informations d'identification.

3. Procédé de traitement d'informations selon la revendication 1, dans lequel, avant l'envoi des informations de synchronisation à l'élément de réseau DRA (200) par l'intermédiaire de l'interface de synchronisation, comprend en outre :
l'établissement d'un lien de synchronisation avec l'élément de réseau DRA (200) par l'intermédiaire de l'interface de synchronisation.

4. Procédé de traitement d'informations selon l'une quelconque des revendications 1 à 3, comprenant en outre :
la suppression des informations de liaison de session 5G en réponse à un élément de réseau SMF de fonction de gestion de session (500) hors ligne, et la notification à l'élément de réseau DRA (200) de la suppression des informations de liaison de session 4G par l'intermédiaire de l'interface de synchronisation.

5. Procédé de traitement d'informations, exécuté par un élément de réseau DRA (200), comprenant :
la réception d'informations de synchronisation envoyées par un élément de réseau BSF (300) par l'intermédiaire d'une interface de synchronisation, dans laquelle les informations de synchronisation décrivent une relation de correspondance entre les informations de liaison de session 5G et les informations de liaison de session 4G, les informations de liaison de session 5G sont dérivées d'un élément de réseau PCF (400), et les informations de liaison de session 4G sont générées à partir des informations de liaison de session 5G en mettant en correspondance les informations de liaison de session 5G avec les informations de liaison de session 4G (S210) ; et
la mise en cache de la relation de correspondance dans les informations de synchronisation, de sorte qu'un message de demande d'autorisation d'accès appartenant à un réseau 5G est transmis à l'élément de réseau PCF (400) conformément à la relation de correspondance en cas de réception du message de demande d'autorisation d'accès appartenant au réseau 5G (S220).

6. Procédé de traitement d'informations selon la revendication 5, dans lequel les informations de liaison de session 5G comprennent les premières informations d'identification, les informations de liaison de session 4G comprennent les deuxièmes informations d'identification, les informations de synchronisation comprennent un champ de correspondance, et le champ de correspondance est configuré pour décrire une relation de correspondance entre les premières informations d'identification et les deuxièmes informations d'identification.

7. Procédé de traitement d'informations selon la revendication 5, dans lequel, avant la réception des informations de synchronisation envoyées par l'élément de réseau BSF (300) par l'intermédiaire de l'interface de synchronisation, comprend en outre :
l'établissement d'un lien de synchronisation avec l'élément de réseau BSF (300) par l'intermédiaire de l'interface de synchronisation.

8. Procédé de traitement d'informations selon l'une quelconque des revendications 5 à 7, comprenant en outre :
la suppression des informations de liaison de la session 4G en réponse à la réception d'un message de notification de suppression envoyé par l'élément de réseau BSF (300) par l'intermédiaire de l'interface de synchronisation.

9. Élément de réseau comprenant : une mémoire, un processeur et un programme informatique sauvegardé dans la mémoire et exploitable par le processeur, dans lequel le processeur est configuré pour exécuter le procédé de traitement d'informations selon l'une quelconque des revendications 1 à 4 ou le procédé de traitement d'informations selon l'une quelconque des revendications 5 à 8 lorsqu'il exécute le programme informatique.

10. Support de stockage lisible par ordinateur comprenant des instructions qui, lorsqu'elles sont exécutées par un ordinateur, amènent ce dernier à exécuter le procédé de traitement d'informations selon l'une quelconque des revendications 1 à 4 ou le procédé de traitement d'informations selon l'une quelconque des revendications 5 à 8.
